# EUROPÄISCHE PATENTSCHRIFT

(11) **EP 1 741 945 B1**
(45) Veröffentlichungstag und Bekanntmachung des Hinweises auf die Patenterteilung: **18.08.2010**
(21) Anmeldenummer: 05013219.0
(22) Anmeldetag: 20.06.2005
(51) Int. Cl.: F16D 1/072, F16D 1/06, B21D 53/84, F01L 1/047, F16H 53/02

(54) **Gebaute Nockenwelle**
Assembled camshaft
Arbre à cames assemblé

(43) Veröffentlichungstag der Anmeldung: 10.01.2007
(73) Patentinhaber: ThyssenKrupp Presta TecCenter AG, 9492 Eschen (LI)
(72) Erfinder: Müller, Oskar, 6721 Thüringerberg (AT)
(74) Vertreter: Adams, Steffen

(56) Entgegenhaltungen:
- WO-A-2004/076095
- DE-A1- 2 333 040
- DE-A1- 4 218 624
- FR-A- 2 704 164
- US-A- 3 734 697
- US-A- 4 376 333
- US-A- 4 630 498
- US-B1- 6 416 245

## Beschreibung

Die Erfindung betrifft ein Verfahren zur Herstellung gebauter Nockenwellen sowie nach diesem Verfahren hergestellte Nockenwellen für Verbrennungsmotoren.

Zur Herstellung gebauter Nockenwellen werden Funktionselemente, wie insbesondere Nocken, Antriebsräder, Lager, Axiallagerscheiben, Sensorringe, Nockenwellenversteller und Wellen einzeln hergestellt. Anschließend werden die Funktionselemente auf der Welle, die als Trag- und Antriebswelle dient, positioniert und mittels eines geeigneten Fügeverfahrens auf der Welle festgelegt.

Im Stand der Technik sind eine Reihe von Fügeverfahren für die Herstellung gebauter Nockenwellen bekannt. In der Massenproduktion hat sich unter anderem eine Verfahrensgruppe durchgesetzt, in der der Nocken auf der rohrförmigen Tragwelle positioniert und anschließend durch Aufweitung der Tragwelle mit Werkzeugen oder hydraulischem Druck befestigt wird (siehe z.B. DE 689 05 065 T2). Diese Verfahren sind technisch sehr aufwändig und benötigen komplexe Fügemaschinen.

Mit steigenden Wellendurchmessern und/oder steigenden Wandstärken für die rohrförmige Tragwelle steigen die erforderlichen Aufweitkräfte bzw. -drücke sehr stark an, sodass die Maschinentechnik noch aufwändiger wird. Auch der Verschleiß der erforderlichen Werkzeuge nimmt erheblich zu, sodass die Standzeiten sinken und die Herstellkosten unverhältnismässig ansteigen.

In der Patentschrift DE 42 18 624 C2 wird ein Fügeverfahren vorgestellt, bei dem zunächst ein Nocken gebildet wird, indem ein Sinternockenteil mit einem Stahlring mittels Diffusionsbondierung verbunden wird. Der Stahlring hat eine vieleckige Ausnehmung zur Aufnahme der Tragwelle. Anschliessend wird der Nocken durch Presssitz auf die Tragwelle gefügt. Hierzu wird die Tragwelle mittels Rändeln aufgeweitet und der Stahlring mit dem daran befestigten Sinternocken über die Tragwelle geschoben.

Wichtige Nachteile dieses Verfahrens bestehen in der aiafwändigen Herstellung des Nockens, bestehend aus zwei Komponenten (Stahlring und Sinterkörper), und in der vieleckigen Ausnehmung des Stahlrings. Die erheblichen Umformkräfte erlauben keine Verwendung von Nocken ohne Stahlringe. Dabei steigen die Umformkräfte mit zunehmendem Wellendurchmesser stark an. Zusätzlich werden erhebliche maximale Überlappungen zwischen Rändel und Nockenausnehmung benötigt. Um die geforderten übertragbaren Drehmomente zu erreichen, sind Überlappungen erforderlich, bei denen eine Spanbildung kaum verhindert werden kann. Zudem sind bei steigenden Wellendurchmessern erhöhte Anforderungen an die Präzision beim Rändeln gestellt, da sonst die Gefahr von Spänen noch weiter steigt.

Daneben hat sich das Verfahren entsprechend der DE 41 21 951 C1 zur Herstellung von Nockenwellen in der Massenproduktion durchgesetzt. Entsprechend diesem Verfahren werden auf der Tragwelle Bereiche mittels gewindeähnlicher Rollierung über den ursprünglichen Wellendurchmesser hinaus aufgeweitet und anschließend die Nocken, deren innere Ausnehmung einen Durchmesser aufweisen, der kleiner ist als der Außendurchmesser des aufgeweiteten Wellenbereiches, aufgeschoben. Der geschmiedete Nocken weist dabei einen trichterartigen Einführkonus auf. Innerhalb dieses Konusbereiches werden bei der Montage die Rollierwülste umgeformt, sodass der Nocken etwas aufgeweitet wird und eine Presspassung zwischen Nocken und Tragwelle erzeugt wird.

Ein besonderer Vorteil dieser Methode besteht darin, dass der Fügeprozess jedes einzelnen Nockens durch Messung der Aufpresskraft überwacht werden kann. Dabei zeigt der Verlauf der Kraftkurve über dem Aufpressweg einen sehr großen Anfangsanstieg, wenn die erste Rollierwulst mit der inneren Ausnehmung des Nockens in Kontakt kommt, und anschließend einen weiteren wellenartigen Anstieg, bis der Nocken vollständig über den aufgeweiteten Bereich gefügt ist. Jede Welle des Anstieges entspricht dabei dem Eintreten einer weiteren Rvllierwulst in den Fügebereich zwischen Nocken und Tragwelle. Versuche haben eine Korrelation zwischen maximaler Aufpresskraft und übertragbarem Drehmoment zwischen Nocken und Tragwelle gezeigt.

Ein Nachteil dieser Technologie besteht jedoch darin, dass bei großen Wellendurchmessern, wie sie beispielsweise für Fahrzeugmotoren in Nutzfahrzeugen benötigt werden, die Kräfte unverhältnismäßig ansteigen und zusätzlich die Unterschiede zwischen Wellental und Wellenberg in der Kraftveirlaufskurve stark ansteigen. Es werden zwar in der Regel bei Nockenwellen mit größeren Wellendurchmessern auch größere übertragbare Drehmomente zwischen Nocken und Tragwelle gefordert, allerdings ist die im Stand der Technik bekannte Methode häufig weit überdimensioniert. Die Folgen sind Montagemaschinen, die sehr große Presskräfte aufbringen müssen sowie Unsicherheiten in der Qualitätsbewertung der Verbindung aufgrund der großen Schwankung zwischen maximaler und minimaler Aufpresskraft in jeder Welle des Kraftanstieges.

Zudem sind bei steigenden Wellendurchmessern erhöhte Anforderungen an die Präzision beim Rollieren gestellt, da sonst die Gefahr von Spänen entsteht.

Weiter ist für die Verfahren entsprechend dem Stand der Technik zu beachten, dass mit steigendem Wellendurchmesser häufig auch die Länge der Nockenwelle größer wird, sodass die Anforderungen an die Montagemaschinen wegen der vergrößerten Aufpresskräfte bei vergrößerten Distanzen zwischen Einspannpunkten sich erhöhen.

Aus der US 6,416,245 B1 ist es bekannt, ein Funktionsbnauteil, das eine Ausnehmung zur Aufnahme einer Welle aufweist, auf einen durch Rändeln aufgeweiteten Bereich der Welle aufzuschieben, um das Funktionsbauteil auf dem aufgeweiteten Bereich der Welle zu fixieren. Dabei wird vorgeschlagen, den Rand der Ausnehmung, der beim Aufschieben der Rändelung der Welle zugewandt ist, als kurviges Profil auszubilden, um das Aufschieben des Funktionsbanteils zu erleichtern und das Abreißen von Material der Welle beim Aufschieben auf die Rändelung zu verhindern.

In der DE 42 18 624 A1 wird ein mechanisches Element mit einer Welle und einem mit dieser Welle mittels Presspassung verbundenen Funktionselement beschrieben. Das Funktionselement ist dabei zweiteilig ausgebildet und daher aufwändig. Es weist einen inneren Ring auf und einen mit diesem verbundenen äußeren Bauteilbereich. Der äußere Bauteilbereich kann mit dem inneren Ring beispielsweise durch Diffusionsbondierung verbunden sein. Der innere Ring, der zur Verbindung des Funktionselementes mit der Welle auf eine lokale Aufweitung der Welle, die durch Rändeln erzeugt worden ist, ausgeschoben wird, weist eine Ausnehmung mit einem unrunden Querschnitt, nämlich mit einem polygonalen Querschnitt auf. Insbesondere in Fig. 6 der DE 42 18 624 A1 wird darauf hingewiesen, dass bei einer Winkelanzahl der Polygone von 8 bzw. 10 besonders hohe Verbindungsfestigkeiten erreicht werden können.

In der US 4,630,498 ist ein Verfahren mit den Merkmalen des Oberbegriffs des Patentanspruchs 1 bzw. eine Nockenwelle mit den Merkmalen des Oberbegriffs des Patentanspruchs 9 offenbart. Von wesentlicher Bedeutung beim Gegenstand der US 4,630,498 ist, dass die Funktionsbauteile jeweils aus mehreren aneinander liegenden Elementen gebildet sind. Dies bedeutet, dass die Funktionselemente sich in axialer Richtung aus mehreren voneinander getrennten und eben aneinander liegenden Einzelelementen zusammensetzen. Um die Funktionsbauteile mittels einer Pressverbindung auf der Welle zu fixieren, sind Zähne auf der Welle vorgesehen, welche sich in axialer Richtung konisch aufweiten können. Die notwendige Aufpresskraft nimmt daher ständig zu, je weiter das Funktionsbauteil auf die Zähne aufgeschoben wird. Daher sind die bei der Fertigung auftretenden Kräfte vergleichsweise groß.

Die Aufgabe der Erfindung ist es, eine kostengünstige und großserientaugliche Verbindung für Funktionsbauteile, wie beispielsweise Lager, Nocken, Antriebsräder, Axiallagerscheiben, Steuerscheiben, Sensorringe oder Nockenwellenversteller mit Tragwellen, zur Herstellung von gebauten Nockenwellen bereitzustellen. Dabei sollen die Funktionsbauteile sowohl aus Stahl als auch aus Sinter oder anderen Werkstoffen hergestellt sein können und die Verbindung zwischen Funktionsbauteil und Tragwelle soll eine hohe Festigkeit in Umfangsrichtung (Momentenübertragung) und in Tragwellenlängsrichtung aufweisen.

Weiter ist es die Aufgabe der Erfindung, die Möglichkeiten der Prozessüberwachung zu verbessern und die während der Fertigung auftretenden Kräfte möglichst niedrig zu halten. Weiter soll auf möglichst einfache Weise eine kraft- und formschlüssige Verbindung erreicht werden, Insbesondere sollen dabei die übertragbaren Drehmomente möglichst groß sein.

Weiter soll eine Nockenwelle, insbesondere für größere Wellendurchmesser der Tragwelle, wie sie beispielsweise für Nutzfahrzeuge erforderlich sind, bereitgestellt werden, die in der Großserie einfach und kostengünstig und bei reduzierten Montagekräften mit hoher Prozesssicherheit hergestellt werden kann.

Zur Lösung der Aufgabenstellung wird mit der Erfindung ein Verfahren mit den Merkmalen des Anspruchs 1 sowie eine Nockenwelle mit den Merkmalen des Anspruchs 8 vorgeschlagen. Die Unteransprüche 2 bis 7 beziehen sich auf bevorzugte Ausgestaltungen des Verfahrens. Die Unteransprüche 9 bis 14 beziehen sich auf bevorzugte Ausführungsformen der erfindungsgemäßen Nockenwelle.

Hinsichtlich des Verfahrens wird die Aufgabe gelöst mit einem Verfahren zur Herstellung einer gebauten Nockenwelle zur Steuerung von Ventilen von Verbrennungskraftmaschinen mit einer Welle und mindestens einem, in einem separaten Fertigungsprozess hergestellten Funktionsbauteil, das eine innere Ausnehmung zur Aufnahme der Welle besitzt, wobei die Welle zumindest in dem Bereich, in welchem das Funktionsbauteil befestigt werden soll, zumindest abschnittsweise durch Mafierialumformung des Außenumfangs der Welle mittels Rändeln aufgeweitet wird, wobei über den Außenumfang der Welle verteilte, sich in Längsrichtung der Wellenachse erstreckende Erhebungen auf der Rohraußenfläche ausgebildet werden, und wobei das Funktionsbauteil mit seiner Ausnehmung auf die Welle aufgefädelt und durch Aufschieben auf die Erhebungen mit der Welle verbunden wird, dadurch gekennzeichnet, dass die Ausnehmung im Funktionsbauteil zur Aufnahme der Welle im Wesentlichen rund ist und dass an den Erhebungen und/oder an der Ausnehmung des Funktionsbauteils Einführmittel vorgesehen sind, die ein weitgehend spanloses Aufschieben des Funktionsbauteils auf die Erhebungen erlauben, wobei die Erhebungen im Wesentlichen durch Umformung des Materials des Funktionsbauteils im Bereich der Ausnehmung des Funktionsbauteils sich in diese teilweise eingraben und dabei das Funktionsbauteil mit der Welle kraft- und formschlüssig verbinden.

Dabei können die Einführmittel als an der Ausnehmung des Funktionsbauteils ausgebildete Einlauffase ausgebildet sein und/oder durch einen an den Erhebungen ausgebildeten, sich trichterförmig aufweitenden Rändeleinlauf gebildet sein.

In einer ersten Ausführungsform der Erfindung wird die Aufgabe konkret gelöst durch ein Verfahren zur Herstellung einer gebauten Nockenwelle zur Steuerung von Ventilen von Verbrennungskraftmaschinen mit einer Welle und mindestens einem, in einem separaten Fertigungsprozess hergestellten Funktionsbauteil, das eine innere Ausnehmung zur Aufnahme der Welle besitzt, wobei die Welle zumindest in dem Bereich, in welchem das Funktionsbauteil befestigt werden soll, zumindest abschnittsweise durch Materialumformung des Außenumfangs der Welle mittels Rändeln aufgeweitet wird, wobei über den Außenumfang der Welle verteilte, sich in Längsrichtung der Wellenachse erstreckende Erhebungen auf der Wellenaußenfläche ausgebildet werden, und wobei das Funktionsbauteil mit seiner Ausnehmung auf die Welle aufgefädelt und durch Aufschieben auf die Erhebungen mit der Welle verbunden wird, dadurch gekennzeichnet, dass die Ausnehmung im Funktionsbauteil zur Aufnahme der Welle im Wesentlichen rund ausgebildet ist und zumindest auf einer Seite und zumindest über einen Teil ihrer axialen Länge trichterartig aufgeweitet ist, wobei die Ausnehmung eine Mündungsöffnung mit einem Durchmesser aufweist, der mindestens dem Durchmesser des aufgeweiteten Wellenbereiches entspricht, und im nicht trichterförmig aufgeweiteten Bereich einen Durchmesser aufweist, der etwas größer als der Durchmesser der Welle neben dem aufgeweiteten Bereich und etwas kleiner als der, durch die über den Aussenumfang der Welle verteilten Erhebungen beschriebene Durchmesser ausgebildet ist, und dass das Funktionsbauteil mit der trichterartig aufgeweiteten Seite zuerst über den aufgeweiteten Bereich der Welle geschoben wird, wobei die Erhebungen im Wesentlichen durch Umformung des Materials des Funktionsbauteils im Bereich der Ausnehmung des Funktionsbauteils sich in diese teilweise eingraben und dabei das Funktionsbauteil mit der Welle kraft- und formschlüssig verbinden.

In einer alternativen Ausführungsform wird das Verfahren zur Herstellung einer gebauten Nockenwelle in der Art abgewandelt, dass die Ausnehmung im Funktionsbauteil zur Aufnahme der Welle im Wesentlichen rund ausgebildet ist und die Erhebungen mindestens einseitig einen Rändeleinlauf aufweisen, wobei sich der durch die Erhebungen beschriebene Durchmesser des Rändeleinlaufs ausgehend vom Rand des Rändeleinlaufs trichterartig aufweitet, wobei der kleinste Durchmesser des Rändeleinlaufs kleiner ist und der Durchmesser im nicht sich trichterartig vergrößernden Teil größer ist als der kleinste Durchmesser der Ausnehmung des Funktionsbauteils und wobei das Funktionsbauteil über den sich trichterartig aufweitenden Durchmesser der Tragwelle geschoben wird, wobei die Erhebungen im Wesentlichen durch Umformung des Materials des Funktionsbauteils im Bereich der Ausnehmung des Funktionsbauteils sich in diese teilweise eingraben und dabei das Funktionsbauteil mit der Welle kraft- und formschlüssig verbinden.

Hinsichtlich der Nockenwelle wird die Aufgabe gelöst durch eine Nockenwelle zur Steuerung von Ventilen von Verbrennungskraftmaschinen mit einer Welle und mindestens einem, in einem separaten Fertigungsprozess hergestellten Funktionsbauteil, das eine innere Ausnehmung zur Aufnahme der Welle besitzt, wobei die Welle zumindest in dem Bereich, in welchem das Funktionsbauteil befestigt ist, zumindest abschnittsweise durch Materialumformung des Außenumfangs der Welle mittels Rändeln aufgeweitet ist, wobei über den Außenumfang der Welle verteilte, sich in Längsrichtung der Wellenachse erstreckende Erhebungen auf der Wellenaußenfläche ausgebildet sind, dadurch gekennzeichnet, dass die Ausnehmung im Funktionsbauteil zur Aufnahme der Welle im Wesentlichen rund ist und dass an den Erhebungen und/oder an der Ausnehmung des Funktionsbauteils Einführmitttel vorgesehen sind, die ein weitgehend spanloses Aufschieben des Funktionsbauteils auf die Erhebungen erlauben, wobei die Erhebungen im Wesentlichen durch Umformung des Materials des Funktionsbauteils im Bereich der Ausnehmung des Funktionsbauteils in diese teilweise eingegraben sind und dadurch das Funktionsbauteil mit der Welle kraft- und formschlüssig verbunden ist.

Dabei können die Einführmittel als an der Ausnehmung des Funktionsbauteils ausgebildete Einlauffase ausgebildet sein und/oder durch einen an den Erhebungen ausgebildeten, sich trichterförmig autweitenden Rändeleinlauf gebildet sein.

In einer ersten Ausführungsform der erfindungsgemäßen Nockenwelle wird die Aufgabe gelöst durch eine Nockenwelle zur Steuerung von Ventilen von Verbrennungskraftmaschinen mit einer Welle und mindestens einem, in einem separaten Fertigungsprozess hergestellten Funktionsbauteil, das eine innere Ausnehmung zur Aufnahme der Welle besitzt, wobei die Welle zumindest in dem Bereich, in welchem das Funktionsbauteil befestigt ist, zumindest abschnittsweise durch Materialumformung des Außenumfangs der Welle mittels Rändeln aufgeweitet ist, wobei über den Außenumfang der Welle verteilte, sich in Längsrichtung der Wellenachse erstreckende Erhebungen auf der Wellenaußenfläche ausgebildet sind,
dadurch gekennzeichnet, dass die Ausnehmung im Funktionsbauteil zur Aufnahme der Welle im Wesentlichen rund ausgebildet ist und zumindest auf einer Seite und zumindest über einen Teil ihrer axialen Länge trichterartig aufgeweitet ist, wobei die Ausnehmung eine Mündungsöffnung mit einern Durchmesser aufweist, der mindestens dem Durchmesser des aufgeweiteten Wellenbereiches entspricht, und im nicht trichterförmig aufgeweiteten Bereich einen Durchmesser aufweist, der etwas größer als der Durchmesser der Welle neben dem aufgeweiteten Bereich und etwas kleiner als der, durch die über den Außenumfang der Welle verteilten Erhebungen beschriebene Durchmesser ausgebildet ist, wobei die Erhebungen im Wesentlichen durch Umformung des Materials des Funktionsbauteils im Bereich der Ausnehmung des Funktionsbauteils in diese teilweise eingegraben sind und dadurch das Funktionsbauteil mit der Welle kraft- und formschlüssig verbunden ist.

In einer alternativen Ausführungsform wird eine Nockenwelle zur Steuerung von Ventilen von Verbrennungskraftmaschinen vorgeschlagen, bei der die Ausnehmung im Funktionsbauteil zur Aufnahme der Welle im Wesentlichen rund ausgebildet ist und die Erhebungen mindestens einseitig einen Rändeleinlauf aufweisen, wobei sich der durch die Erhebungen beschriebene Durchmesser des Rändeleinlaufs ausgehend vom Rand des Rändeleinlaufs trichterartig aufweitet, wobei der kleinste Durchmesser des Rändeleinlaufs kleiner ist und der Durchmesser im nicht sich trichterartig vergrößernden Teil größer ist als der kleinste Durchmesser der Ausnehmung des Funktionsbauteils, wobei die Erhebungen im Wesentlichen durch Umformung des Materials des Funktionsbauteils im Bereich der Ausnehmung des Funktionsbauteils in diese teilweise eingegraben sind und dadurch das Funktionsbauteil mit der Welle kraft- und formschlüssig verlounden ist.

Dadurch, dass sich die Erhebungen des durch Rändeln aufgeweiteten Bereiches der Tragwelle beim Aufschieben des Funktionsbauteils in dessen Werkstoff im Bereich der Ausnehmung einformen bzw. eingraben und der verdrängte Werkstoff des Funktionsbauteils teilweise um die Erhebungen herumfließt, entsteht zum einen ein in Umfangsrichtung wirksamer Formschluss, der eine hohe Festigkeit der Verbindung in Umfangsrichtung gewährleistet. Dadurch können hohe in Umfangsrichtung wirksame Momente übertragen werden, wie dies z.B. bei Nocken einer Nockenwelle erforderlich ist.

Zum anderen übt der Werkstoff des Funktionsbauteils, der durch das Einformen bzw. Eingraben der Erhebungen unter mechanischer Spannung steht, auf die Tragewelle (d.h. auf die Erhebungen) aufgrund der Rückfederung des Werkstoffs eine Druckkraft aus. Dadurch entsteht zwischen den einander berührenden Flächen der Ausnehmung des Funktionsbauteils und den Außenflächen der Erhebungen eine hohe Flächenpressung, durch die ein Kraftschluss erreicht wird. Dieser Kraftschluss gewährleistet eine hohe Festigkeit der Verbindung in Richtung der Tragwellenlängsachse. Durch diesen Kraft- und Formschluss weist die Verbindung eine besonders gute Verträglichkeit für dynamische Wechselbeanspruchungen in Umfangsrichtung auf.

Im Folgenden wird die Erfindung anhand von Zeichnungen näher erläutert. Die schematischen Zeichnungen veranschaulichen die Erfindung anhand einer bevorzugten Ausführungsform. Es zeigen
- Figur 1: eine räumliche Darstellung einer Ausführungsform des erfindungsgemäßen Funktionsbauteils, einen Nocken 1a;
- Figur 2: eine Ausführungsform des erfindungsgemäßen Funktionsbauteils, eine Exzenterscheibe 1b;
- Fig. 3, Fig. 4: einen Längsschnitt durch einen erfindungemäßen Nocken mit unterschiedlicher Einlauffase 4;
- Figur 5: Veranschaulichung des Fügeprozesses der gebauten Nockenwelle;
- Figur 6: einen Querschnitt durch die Tragwelle 2 im aufgeweiteten Bereich;
- Figur 7: einen Querschnitt durch die Aufweitungen in einer anderen Ausführungsform im aufgeweiteten Bereich der Tragwelle 2 entsprechend dem Ausschnitt X von Figur 6;
- Figur 8: die gleiche Ansicht wie Figur 7, jedoch mit einer alternativen Ausführungsform.

In der dargestellten bevorzugten Ausführungsform ist die Tragwelle 2 rohrförmig ausgebildet,

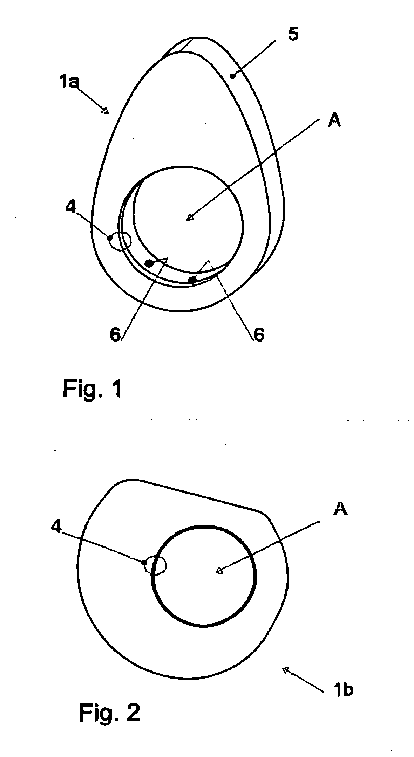

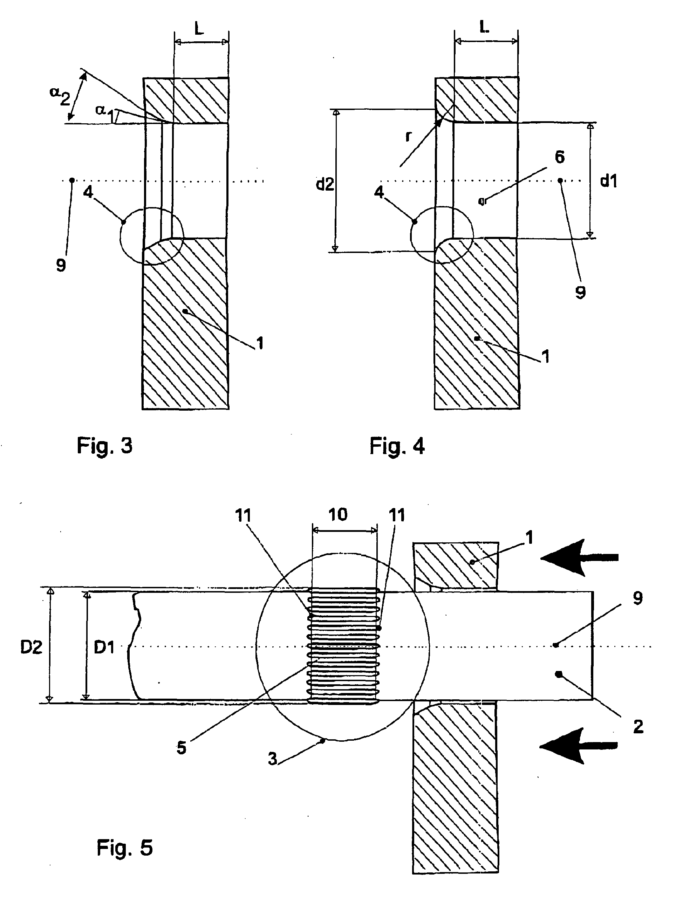

Das Funktionsbauteil, ein Nocken 1a entsprechend Figur 1, eine Exzenterscheibe 1b entsprechend Figur 2 oder auch ein Lagerring, ein Sensorring, ein Antriebsrad oder ein anderes Element, besitzt eine innere Ausnehmung A zur Aufnahme der Tragwelle 2 mit einem Öffnungsdurchmesser d1 (vgl. Fig. 4). Dabei ist der Durchmesser d1 für die Fügelänge L (vgl. Fig. 3, 4) konstant. Die innere Ausnehmung besitzt eine Einlauffase 4, die an ihrer Mündung einen Öffnungsdurchmesser d2 besitzt und in den Öffnungsdurchmesser d1 der Ausnehmung A übergeht.

Die Ausnehmung A des Funktionsbauteils 1 hat dabei einen im Wesentlichen kreisrunden Querschnitt und die Oberfläche 6 der inneren Ausnehmung A ist dabei bevorzugt glatt. Insbesondere weist die Oberfläche 6 der inneren Ausnehmung A keine Ecken oder sonstigen Unstetigkeitsstellen in Umfangsrichtung auf. Im einfachsten und bevorzugten Fall hat die Ausnehmung A einen kreisrunden Querschnitt, wie er beim Schrupp-Drehen, Bohren, Sintern oder sogar Schmieden ohne Nacharbeit hergestellt werden kann. Es versteht sich, dass die Begriffe "rund", "kreisrund" sowie "glatt" nicht im streng mathematischen Sinne zu verstehen sind, sondern dass die Form der Ausnehmung aufgrund von Fertigungstoleranzen und unvermeidbaren technischen Ungenauigkeiten von der reinen Kreisform abweichen kann. Die vorgeschlagene Lösung nutzt dabei den gesamten Umfang der Ausnehmung A zum Aufbau des Kraft- und Formschlusses aus.

Für die Form der Einlauffase 4 können alternativ zwei verschiedene Einlaufformen gewählt werden. Figur 3 zeigt zwei nacheinander in Richtung der Tragwellenachse 9 angeordnete Kegelabschnitte mit nach außen weisenden Kegelwinkeln α1, α2, die sich zur Stirnfläche des Nockens hin vergrößern, bevorzugt um das drei- bis siebenfache. Die Figur 4 zeigt dagegen als Einlauffase einen Einlaufradius r.

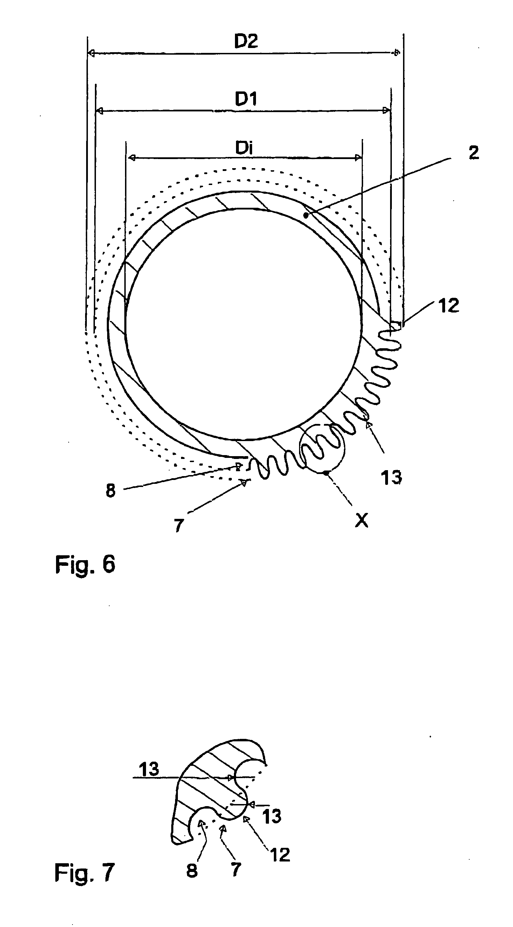

Die Tragwelle 2, mit einem Außendurchmesser D1, wird in dem Bereich 3, an dem das Funktionsbauteil 1 gefügt werden soll, mittels Rändet auf den Durchmesser D2 aufgeweitet. Dabei werden durch die Rändeloperation Erhebungen 7 und Vertiefungen 8 eingeformt (vgl. Fig. 6, 7), wobei der Innendurchmesser Di nicht oder nur sehr wenig reduziert wird. Die Erhebungen 7 sind unterteilt in zwei Rändeleinläufe 11 und eine Erhebungslänge 10 zwischen den Rändeleinläufen 11.

Die Fügeoperation erfolgt in der Weise, dass entsprechend der Figur 5 das Funktionsbauteil 1 mit seiner Einlauffase 4 zuerst in der durch den Pfeil angedeuteten Richtung über den aufgeweiteten Bereich 3 der Tragwelle 2 geschoben wird und dabei eine kraft- und formschlüssige Verbindung mit der Tragwelle eingeht.

Der Erfindung liegt die Erkenntnis zugrunde, dass bei Ausbildung eines Kraft- und Formschlusses zwischen dem Funktionsbauteil 1 und der Tragwelle 2 die größten Drehmomente übertragen werden können. Beim Aufschieben des Funktionsbauteils 1 auf den aufgeweiteten Bereich der Welle 2 muss eine Spanbildung möglichst vermieden werden, denn Versuche haben gezeigt, class durch Spanbildung das übertragbare Drehmoment verringert wird, da Werkstoff aus dem Fügespalt herausgebrochen wird und damit nicht mehr zum Formschluss bzw. zum Spannungsaufbau und damit zum Kraftschluss beitragen kann. Bei der Umformung, mit der sich die Erhebungen der Tragwelle in die Ausnehmung des Funktionsbauteils 1 eingraben, muss darauf geachtet werden, dass jeder Volumenbereich in der Fügezone im Verlaufe der Aufpressoperation maximal nur einmal umgeformt wird. Andemfalls kann es zu Hohlräumen und Spannungsverlusten und damit zur Verringerung des Form- und/oder Kraftschlusses kommen.

Deswegen ist es von besonderer Bedeutung, dass die Erhebungen 7 im aufgeweiteten Bereich der Tragwelle 2 möglichst genau in Längsrichtung der Tragwelle 2 und damit parallel zur Achse 9 der Tragwelle ausgerichtet sind. In einer vorteilhaften Weiterbildung weisen die Erhebungen 7 über ihre gesamte Länge 10, abgesehen vom Bereich des Rändeleinlaufes 11, eine möglichst konstante Höhe und Querschnittsform auf. Insbesondere bedeutet das, dass die Erhebungen über eine möglichst große Länge mit einem konstanten Querschnitt ausgebildet sind. Dabei sind die Erhebungen 7 im Bereich des Rändeleinlaufes 11 in Bezug auf Höhe und Querschnitt kleiner als im übrigen Bereich 10 der Aufweitung 3.

Weiter ist es besonders vorteilhaft, die Erhebungen 7 möglichst hart auszulegen, was beispielsweise bereits durch die Kaltverfestigung des Tragwellenwerkstoffes beim Rändeln erfolgen kann. Durch einen mehrfachen Umlauf des Rändelwerkzeugs an ein und demselben Tragwellenabschnitt 3 kann diese Kaltverfestigung noch erhöht werden. Allerdings muss dabei darauf geachtet werden, dass das Umformvermögen des Werkstoffes der Tragwelle 2 nicht überschritten wird und dadurch Späne entstehen. Auch dürfen die Erhebungen nicht zu spitz ausgeformt werden, weil dadurch die Spanbildung begünstigt wird. Das heißt, die Radien 13 der Erhebungsspitzen 12 sollten nicht zu klein sein. Insbesondere ist es von Vorteil, wenn die Querschnittskontur durch die Erhebung 7 und Vertiefung 8 möglichst annähernd durch zwei ineinander übergehende Halbkreise mit dem Radius 13 beschrieben werden können, wie es in der Figur 7 schematisch dargestellt ist.

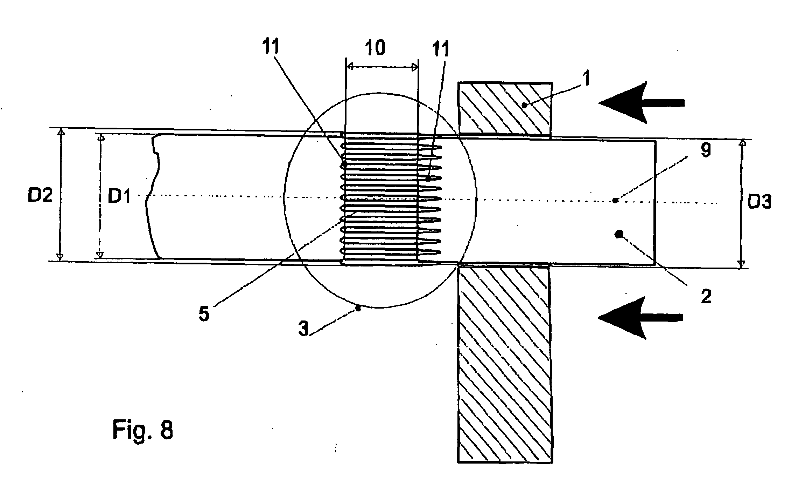

In einer alternativen Ausführung (siehe Figur 8) ist die Einführfase 4 an der Ausnehmung des Funktionsbauteils nicht ausgeführt bzw. auf einen einfachen Kantenbruch oder eine Entgratung reduziert ausgebildet. In dieser Ausführungsform übemimmt ein speziell geformter Rändeleinlauf 11 diese Funktion. Der Rändeleinlauf 11 ist in dieser Ausführung derart ausgebildet, dass der Durchmesser, den die Erhebungen 7 beschreiben, sich ausgehend von dem Rand der Rändelung, über den das Funktionsbauteil bei der Montage geschoben wird, trichterartig vergrößert. Dabei ist der Durchmesser D3 am Rand der Rändelung kleiner und der größte Durchmesser des Rändeleinlaufs 11 größer als der Durchmesser d1 der Ausnehmung A des Funktionsbauteils. Bevorzugt verhält sich der axiale Durchmesserverlauf des aufgeweiteten Bereiches 3 der Tragwelle 2 analog zu der oben beschriebenen trichterartigen Aufweitung der Ausnehmung A des Funktionsbauteils. Der Vorteil dieser Ausführung besteht darin, dass das Funktionsbauteil nicht mit einer Einlauffase versehen sein muss. Allerdings sind derartige Rändel jedoch aufwändiger in der Herstellung, sodass hier eine Entscheidung je nach konkretem Anwendungsfall getroffen werden muss.

Im Prinzip würde es ausreichen, nur an einem Ende der Rändelung einen Rändeleinlauf 11 vorzusehen, wobei dann festgelegt ist, dass das Funktionsbauteil 1 in Richtung auf den Rändeleinlauf 11 hin auf die Welle 2 aufgeschoben werden muss.

Weiter ist es vorteilhaft, wenn das Funktionsbauteil 1 durch das Aufschieben auf den aufgeweiteten Bereich der Tragwelle nicht plastisch, sondern nur wenig elastisch aufgeweitet wird. Dadurch erfährt das Funktionsbauteil weniger Zugspannungen, wodurch die Rissgefahr sinkt und die Schwankung der Geometrie der äußeren Oberfläche 5 des Funktionsbauteils 1 verringert wird. Soweit elastische Aufweitungen des Funktionsbauteils 1 durch das Aufschieben auf die Tragwelle 2 unvermeidbar oder zur Erzielung eines ausreichenden Kraftschlusses erforderlich sind, sollten diese Aufweitungen an der Außenoberfläche des Funktionsbauteils 1 im Durchmesser ein Maß von 0,2 mm nicht übersteigen. Bevorzugt sind Aufweitungsdurchmesser unter 0,05 mm, wobei im Idealfall keine am Außenumfang messbare Aufweitung vorgesehen ist.

Durch jede dieser einzelnen Maßnahmen verringert sich bei gleichem übertragbarem Drehmoment die für die Verbindung notwendige Überdeckung als Differenz aus dem Durchmesser d1 der Ausnehmung A des Funktionsbauteils 1 und dem durch die Erhebungen 7 beschriebenen Durchmesser D2 an der Tragwelle 2. So genügen für eine für Nockenwellen ausreichende Verbindung bereits Überdekkungen von 0,05 mm bis 0,2 mm, was einer Höhe der Erhebungen 7 von etwa 0,1 mm bis 0,3 mm entspricht.

In besonderen Anwendungsfällen, beispielsweise bei sehr großen Durchmessern D1, kann es von Vorteil sein, voneinander beabstandet zwei oder mehrere Aufweitungen innerhalb einer Fügelänge L auf die Tragwelle 2 aufzubringen. Dadurch können die Aufpresskräfte weiter begrenzt werden. Jedoch wird durch diese Maßnahme das übertragbare Drehmoment verringert.

Der in der vorliegenden Erfindung vorgeschlagene Montageprozess bedingt eine Reihe von Vorteilen. Durch die Verwendung einer im Querschnitt kreisrunden inneren Ausnehmung der Funktionsbauteile, sind diese sehr einfach herzustellen. Nocken können so beispielsweise durch Sintern, aber auch durch Kalt- oder Warmschmieden nahezu ohne Nacharbeit hergestellt werden. Die Einlauffase kann dabei direkt im Fertigungsprozess mit angeformt werden. Auf aufwändige Nacharbeit mittels Räumen und teilweise sogar auf die Nacharbeit mittels Drehen kann verzichtet werden. Es brauchen weder kleine Verzahnungen, noch Ovalitäten, noch vieleckige Innenkonturen in die Ausnehmung eingebracht zu werden.

Beim Aufpressen des Funktionsbauteils erfolgt eine gleichmäßige Werkstoffumformung des Funktionsbauteilwerkstoffs im Bereich der Ausnehmung, sodass Spannungsspitzen vermieden werden. Der Werkstoff an der Oberfläche der inneren Ausnehmung wird durch die Erhebungen an der Tragwelle verdrängt und fließt dabei um die Erhebungen herum. Je nach Durchmesserdifferenz zwischen Ausnehmung A und Tragwelle 2 fließt der Werkstoff sogar teilweise in die Vertiefungen 8 an der Tragwelle 2 hinein. Dadurch wird ein sehr guter Formschluss erzeugt. Gleichzeitig ergeben die Restelastizitäten der plastischen lokalen Verformungen aufgrund der Rückfederung des Werkstoffs des Funktionsbauteils einen Beitrag zum Kraftschluss, selbst wenn das Funktionsbauteil durch das Aufschieben überhaupt nicht aufgeweitet worden ist. Die Erhebungen 7 werden an ihren Seitenflanken quasi eingeklemmt durch das plastisch um sie herumgeformte Material des Funktionsbauteils. In der Regel wird das Funktionsbauteil zusätzlich geringfügig elastisch, keinesfalls plastisch, aufgeweitet, sodass hierdurch wegen der Werkstoffrückfederung zusätzliche Beiträge zu einem Kraftschluss geliefert werden.

Die nach diesem Verfahren hergestellten Nockenwellen hatten besonders gut den Wechselbelastungen, die durch das Wechselmoment im Motorbetrieb verursacht werden, stand. Der großflächige Formschluss mit der elastischen Vorspannung führt dazu, dass sich der Abstand zwischen den ertragbaren statischen Belastungen zu den ertragbaren dynamischen Wechselbelastungen verringert.

Weder mit rollierten Erhebungen in Umfangsrichtung der Tragwelle noch mit einem vieleckigen Querschnitt der Ausnehmung des Funktionsbauteils lässt sich ein derartig guter Form- und Kraftschluss erreichen.

Gleichzeitig ist der Kraftanstieg während der Aufpressphase des Funktionsbauteils auf den aufgeweiteten Wellenbereich nahezu konstant, mindestens monoton wachsend, sodass eine sehr gute und einfache Qualitätskontrolle (d.h. Kontrolle des Fügeprozesses durch Messung und Überwachung des Verlaufs der Aufpresskraft) ermöglicht ist.

Liste der Bezeichnungen
- 1: Funktionsbauteil
- 1a: Nocken
- 1 b: Exzenternocken
- 2: Tragwelle
- 3: Aufgeweiteter Bereich
- 4: Einlauffase
- 5: Außenoberfläche
- 6: Innenoberfläche
- 7: Erhebung
- 8: Vertiefung
- 9: Tragwellenachse
- 10: Erhebungslänge
- 11: Rändeleinlauf
- 12: Erhebungsspitze
- 13: Radius
- A: Nockenausnehmung
- L: Fügelänge
- X: Ausschnitt
- d1: Durchmesser Nockenausnehmung
- d2: Durchmesser Mündungsöffnung
- r: Einlaufradius
- D1: Wellenaußendurchmesser
- D2: Durchmesser des aufgeweiteten Bereichs
- α₁: Einlauffasenwinkel
- α₂: Einlauffasenwinkel

## Patentansprüche

1. Verfahren zur Herstellung einer gebauten Nockenwelle zur Steuerung von Ventilen von Verbrennungskraftmaschinen mit einer Welle (2) und mindestens einem, in einem separaten Fertigungsprozess hergestellten Nocken (1), der eine innere Ausnehmung (A) mit einem Durchmesser (d1) zur Aufnahme der Welle (2) besitzt, wobei die Welle (2) zumindest in dem Bereich (3), in weichem der Nocken (1) befestigt werden soll, zumindest abschnittsweise durch Materialumformung des Außenumfangs der Welle (2) mittels Rändeln aufgeweitet wird, wobei über den Außenumfang der Welle (2) verteilte, sich in Längsrichtung der Wellenachse (9) erstreckende Erhebungen (7) auf der Wellenaußenfläche ausgebildet werden, und wobei der Nocken (1) mit seiner Ausnehmung (A) auf die Welle (2) aufgefädelt und durch Aufschieben auf die Erhebungen (7) mit der Welle (2) verbunden wird, wobei die Ausnehmung (A) im Nocken (1) zur Aufnahme der Welle (2) einen kreisrunden Querschnitt aufweist, **dadurch gekennzeichnet, dass** an den durch Rändeln gebildeten Erhebungen (7) mindestens ein Rändeleinlauf (11) vorgesehen ist, der derart ausgebildet ist, dass der Durchmesser, den die Erhebungen (7) beschreiben, sich ausgehend von dem Rand der Rändelung trichterartig vergrößert, wobei die Erhebungen (7) benachbart zu dem sich trichterartig vergrößernden Rändeleinlauf (11) eine Erhebungslänge (10) und einen Durchmesser (D2) aufweisen, wobei die Höhe und der Querschnitt der Erhebungen (7) im Bereich des Rändeleinlaufs (11) kleiner sind als im übrigen Bereich der Erhebungslänge (10), und wobei sich die Erhebungen (7) durch Umformung des Materials des Nockens (1) im Bereich der Ausnehmung (A) des Nockens (1) in diese teilweise eingraben und dabei den Nocken (1) mit der Welle (2) kraft- und formschlüssig verbinden, wobei der Betrag einer als Differenz aus dem Durchmesser (d1) der Ausnehmung (A) des Nockens (1) und dem durch die Erhebungen (7) beschriebenen Durchmessen (D2) definierten Überdeckung zwischen 0,05 mm bis 0,2 mm liegt.

2. Verfahren nach Anspruch 1, **dadurch gekennzeichnet, dass** an der Ausnehmung (A) des Nockens (1) eine Einlauffase (4) ausgebildet ist.

3. Verfahren nach Anspruch 2, **dadurch gekennzeichnet, dass** zur Bildung der Einlauffase (4) die Ausnehmung (A) des Nockens (1) zumindest auf einer Seite und zumindest über einen Teil ihrer axialen Länge trichterartig aufgeweitet ist, wobei die Ausnehmung (A) eine Mündungsöffnung mit einem Durchmesser (d2) aufweist, der mindestens dem Durchmesser (D2) des aufgeweiteten Wellenbereiches (3) entspricht, und im nicht trichterförmig aufgeweiteten Bereich einen Durchmesser (d1) aufweist, der größer als der Durchmesser (D1) der Welle (2) neben dem aufgeweiteten Bereich (3) und kleiner als der, durch die über den Außenumfang der Welle (2) verteilten Erhebungen (7) beschriebene Durchmesser (D2) ausgebildet ist, wobei der Nocken (1) mit der trichterartig aufgeweiteten Seite zuerst über den aufgeweiteten Bereich (3) der Welle (2) geschoben wird.

4. Verfahren nach Anspruch 1, **dadurch gekennzeichnet, dass** die Erhebungen (7) mindestens einseitig den Rändeleinlauf (11) aufweisen, wobei der kleinste Durchmesser des Rändeleinlaufs (11) kleiner ist und der Durchmesser im nicht sich trichterartig vergrößernden Teil größer ist als der kleinste Durchmesser (d1) der Ausnehmung (A) des Nockens (1) und wobei der Nocken (1) über den sich trichterartig aufweitenden Durchmesser der Tragwelle (2) geschoben wird.

5. Verfahren nach den voranstehenden Ansprüchen, **dadurch gekennzeichnet, dass** die Erhebungen (7) über den größten Teil ihrer Länge einen konstanten Querschnitt aufweisen.

6. Verfahren nach den voranstehenden Ansprüchen, **dadurch gekennzeichnet, dass** sich der Nocken (1) durch den Fügevorgang nicht oder zumindest nicht mehr als 0,05 mm (bezogen auf den Ausgangsdurchmesser der Außenkontur des nicht gefügten Nockens) aufweitet.

7. Verfahren nach den voranstehenden Ansprüchen, **dadurch gekennzeichnet, dass** beim Aufpressen ein nahezu konstanter, mindestens monoton wachsender Anstieg der Aufpresskraft erfolgt.

8. Nockenwelle zur Steuerung von Ventilen von Verbrennungskraftmaschinen mit einer Welle (2) und mindestens einem, in einem separaten Fertigungsprozess hergestellten Nocken (1), der eine innere Ausnehmung (A) mit einem kreisrunden Querschnitt mit einem Durchmesser (d1) zur Aufnahme der Welle (2) besitzt, wobei die Welle (2) zumindest in dem Bereich, in welchem der Nocken (1) befestigt ist, zumindest abschnittsweise durch Materialumformung des Außenumfangs der Welle (2) mittels Rändeln aufgeweitet ist, wobei über den Außenumfang der Welle (2) verteilte, sich in Längsrichtung der Wellenachse (9) erstreckende Erhebungen (7) auf der Wellenaußenfläche ausgebildet sind, **dadurch gekennzeichnet, dass** an den Erhebungen (7) mindestens ein Rändeleinlauf (11) vorgesehen ist, der derart ausgebildet ist, dass der Durchmesser, den die Erhebungen (7) beschreiben, sich ausgehend von dem Rand der Rändelung trichterartig vergrößert, wobei die Erhebungen (7) benachbart zu dem sich trichterartig vergrößeenden Rändeleinlauf (11) eine Erhebungslänge (10) und einen Durchmesser (D2) aufweisen, wobei die Höhe und der Querschnitt der Erhebungen (7) im Bereich des Rändeleinlaufs (11) kleiner sind als im übrigen Bereich der Erhebungslänge (10), und wobei die Erhebungen (7) im Wesentlichen durch Umformung des Materials des Nockens (1) im Bereich der Ausnehmung (A) des Nockens (1) in diesen teilweise eingegraben sind und **dadurch** der Nocken (1) mit der Welle (2) kraft- und formschlüssig verbunden ist, wobei der Betrag einer als Differenz aus dem Durchmesser (d1) der Ausnehmung (A) des Nockens (1) und dem durch die Erhebungen (7) beschriebenen Durchmesser (D2) definierten Überdeckung zwischen 0,05 mm bis 0,2 mm liegt.

9. Nockenwelle nach Anspruch 8, **dadurch gekennzeichnet, dass** an der Ausnehmung (A) des Nockens (1) eine Einlauffase (4) ausgebildet ist.

10. Nockenwelle nach Anspruch 9, **dadurch gekennzeichnet, dass** zur Bildung der Einlauffase (4) die Ausnehmung (A) des Nockens (1) zumindest auf einer Seite und zumindest über einen Teil ihrer axialen Länge trichterartig aufgeweitet ist, wobei die Ausnehmung (A) eine Mündungsöffnung mit einem Durchmesser (d2) aufweist, der mindestens dem Durchmesser (D2) des aufgeweiteten Wellenbereiches (3) entspricht, und im nicht trichterförmig aufgeweiteten Bereich einen Durchmesser (d1) aufweist, der größer als der Durchmesser (D1) der Welle (2) neben dem aufgeweiteten Bereich (3) und kleiner als der, durch die über den Außenumfang der Welle (2) verteilten Erhebungen (7) beschriebene Durchmesser (D2) ausgebildet ist.

11. Nockenwelle nach Anspruch 8, **dadurch gekennzeichnet, dass** die Erhebungen (7) mindestens einseitig den Rändeleinlauf (11) aufweisen, wobei der kleinste Durchmesser des Rändeleinlaufs (11) kleiner ist und der Durchmesser im nicht sich trichterartig vergrößernden Teil größer ist als der kleinste Durchmesser (d1) der Ausnehmung (A) des Nockens (1).

12. Nockenwelle nach den Ansprüchen 8 bis 11, **dadurch gekennzeichnet, dass** die Erhebungen (7) über den größten Teil ihrer Länge mit einem konstanten Querschnitt ausgebildet sind.

13. Nockenwelle nach den Ansprüchen 8 bis 12, **dadurch gekennzeichnet, dass** mindestens ein Nocken (1) durch Schmieden oder Sintern hergestellt ist.

14. Nockenwelle nach den Ansprüchen 8 bis 13, **dadurch gekennzeichnet, dass** der Nocken (1) durch den Fügevorgang nicht oder zumindest nicht mehr als 0,05 mm (bezogen auf den Ausgangsdurchmesser der Außenkontur des nicht gefügten Nockens) elastisch aufgeweitet ist.

## Claims

1. Method for producing a built-up camshaft for controlling valves of internal combustion engines, having a shaft (2) and at least one cam (1) which is produced in a separate manufacturing process and has an inner cut-out (A) having a diameter (d1) for receiving the shaft (2), wherein at least in the region (3) in which the cam (1) is to be attached, the shaft (2) is widened at least in sections by material shaping of the outer circumference of the shaft (2) by means of knurling, wherein elevations (7) which are distributed over the outer circumference of the shaft (2) and extend in the longitudinal direction of the shaft axis (9) are formed on the shaft outer surface, and wherein the cam (1) is threaded with its cut-out (A) onto the shaft (2) and is connected to the shaft (2) by being slid onto the elevations (7), wherein the cut-out (A) in the cam (1) for receiving the shaft (2) has a circular cross-section, **characterised in that** provided on the elevations (7) formed by knurling is at least one knurled entry (11) which is formed in such a manner that the diameter described by the elevations (7) increases in a funnel-like manner starting from the edge of the knurling, wherein adjacent to the knurled entry (11), which increases in a funnel-like manner, the elevations (7) have an elevation length (10) and a diameter (D2), wherein the height and the cross-section of the elevations (7) are smaller in the region of the knurled entry (11) than in the remaining region of the elevation length (10), and wherein by shaping the material of the cam (1) in the region of the cut-out (A) of the cam (1) the elevations (7) become partially embedded in the cut-out and thus connect the cam (1) to the shaft (2) in a non-positive and positive manner, wherein the value of an overlap defined as the difference between the diameter (d1) of the cut-out (A) of the cam (1) and the diameter (D2) described by the elevations (7) is between 0.05 mm to 0.2 mm.

2. Method as claimed in claim 1, **characterised in that** an entry chamfer (4) is formed on the cut-out (A) of the cam (1).

3. Method as claimed in claim 2, **characterised in that** in order to form the entry chamfer (4) the cut-out (A) of the cam (1) is widened in a funnel-like manner at least on one side and at least over a part of its axial length, wherein the cut-out (A) comprises a mouth opening having a diameter (d2) which corresponds at least to the diameter (D2) of the widened shaft region (3), and in the region not widened in a funnel-like manner has a diameter (d1) which is formed to be larger than the diameter (D1) of the shaft (2) next to the widened region (3), and is formed to be smaller than the diameter (D2) described by the elevations (7) distributed over the outer circumference of the shaft (2), wherein the cam (1) is slid with the side widened in a funnel-like manner initially over the widened region (3) of the shaft (2).

4. Method as claimed in claim 1, **characterised in that** the elevations (7) comprise at least on one side the knurled entry (11), wherein the smallest diameter of the knurled entry (11) is smaller than and the diameter in the part which does not increase in a funnel-like manner is larger than the smallest diameter (d1) of the cut-out (A) of the cam (1) and wherein the cam (1) is slid over the diameter of the support shaft (2) which widens in a funnel-like manner.

5. Method as claimed in the preceding claims, **characterised in that** the elevations (7) have a constant cross-section over the largest part of their length.

6. Method as claimed in the preceding claims, **characterised in that** as a result of the joining procedure the cam (1) does not widen or at least does not widen more than 0.05 mm (in relation to the initial diameter of the outer contour of the not joined cam).

7. Method as claimed in the preceding claims, **characterised in that** during the press-on procedure there is a virtually constant, at least monotonously rising increase in the press-on force.

8. Camshaft for controlling valves of internal combustion engines having a shaft (2) and at least one cam (1) which is produced in a separate manufacturing process and has an inner cut-out (A) having a circular cross-section with a diameter (d1) for receiving the shaft (2), wherein at least in the region in which the cam (1) is attached, the shaft (2) is widened at least in sections by material shaping of the outer circumference of the shaft (2) by means of knurling, wherein elevations (7) which are distributed over the outer circumference of the shaft (2) and extend in the longitudinal direction of the shaft axis (9) are formed on the shaft outer surface, **characterised in that** provided on the elevations (7) is at least one knurled entry (11) which is formed in such a manner that the diameter described by the elevations (7) increases in a funnel-like manner starting from the edge of the knurling, wherein adjacent to the knurled entry (11), which increases in a funnel-like manner, the elevations (7) have an elevation length (10) and a diameter (D2), wherein the height and the cross-section of the elevations (7) are smaller in the region of the knurled entry (11) than in the remaining region of the elevation length (10), and wherein essentially by shaping the material of the cam (1) in the region of the cut-out (A) of the cam (1) the elevations (7) are partially embedded in the cam and as a result the cam (1) is connected to the shaft (2) in a non-positive and positive manner, wherein the value of an overlap defined as the difference between the diameter (d1) of the cut-out (A) of the cam (1) and the diameter (D2) described by the elevations (7) is between 0.05 mm to 0.2 mm.

9. Camshaft as claimed in claim 8, **characterised in that** an entry chamfer (4) is formed on the cut-out (A) of the cam (1).

10. Camshaft as claimed in claim 9, **characterised in that** in order to form the entry chamfer (4) the cut-out (A) of the cam (1) is widened in a funnel-like manner at least on one side and at least over a part of its axial length, wherein the cut-out (A) comprises a mouth opening having a diameter (d2) which corresponds at least to the diameter (D2) of the widened shaft region (3), and in the region not widened in a funnel-like manner has a diameter (d1) which is formed to be larger than the diameter (D1) of the shaft, (2) next to the widened region (3), and is formed to be smaller than the diameter (D2) described by the elevations (7) distributed over the outer circumference of the shaft (2).

11. Camshaft as claimed in claim 8, **characterised in that** the elevations (7) comprise at least on one side the knurled entry (11), wherein the smallest diameter of the knurled entry (11) is smaller than and the diameter in the part which does not increase in a funnel-like manner is larger than the smallest diameter (d1) of the cut-out (A) of the cam (1).

12. Camshaft as claimed in claims 8 to 11, **characterised in that** the elevations (7) are formed having a constant cross-section over the largest part of their length.

13. Camshaft as claimed in claims 8 to 12, **characterised in that** at least one cam (1) is produced by forging or sintering.

14. Camshaft as claimed in claims 8 to 13, **characterised in that** as a result of the joining procedure the cam (1) is not resiliently widened or at least is not resiliently widened more than 0.05 mm (in relation to the initial diameter of the outer contour of the not joined cam).

## Revendications

1. Procédé pour la fabrication d'un arbre à cames assemblé, destiné à la commande de soupapes de moteurs à combustion interne, avec un arbre (2) et au moins une came (1), qui, réalisée par un processus de fabrication séparé, présente un évidement intérieur (A) avec un diamètre (d1) pour la réception de l'arbre (2), ledit arbre (2) étant élargi, au moins par sections, par déformation de la matière du pourtour extérieur de l'arbre (2), au moyen de molettes, au moins dans la région (3) dans laquelle la came (1) est fixée, des bossages (7), répartis sur la périphérie de l'arbre (2), en s'étendant dans le sens longitudinal de l'axe (9) de l'arbre (2), étant formés sur la surface extérieure de l'arbre, et la came (1) étant enfilée sur l'arbre (2), par son évidement (A), et reliée à l'arbre (2), par déplacement sur les bossages (7), l'évidement (A), pratiqué dans la came (1), présentant une section transversale ronde pour la réception de l'arbre (2), **caractérisé en ce que**, sur les bossages (7), formés par moletage, est prévu au moins l'amorce du moletage (11), qui est conçue de sorte que le diamètre, décrit par les bossages (7), s'élargisse en forme d'entonnoir à partir du bord du moletage, les bossages (7), voisins de l'amorce du moletage (11), qui s'élargit en forme d'entonnoir, présentant une longueur de bossage (10) et un diamètre (D2), la hauteur et la section transversale des bossages (7) étant plus petites dans la région de l'amorce du moletage (11) que dans le reste de la longueur de bossage (10), et les bossages (7) étant, par déformation de la matière de la came (1), dans la région de l'évidement (A) de la came (1), partiellement encavés dans celui-ci et, ce faisant, relient, de force et par emboîtement, la came (1) à l'arbre (2), la grandeur d'un chevauchement, défini en tant que différence résultant du diamètre (d1) de l'évidement (A) de la came (1) et du diamètre (D2) décrit par les bossages (7), étant située entre 0,05 mm et 0,2 mm.

2. Procédé selon la revendication 1, **caractérisé en ce qu'**un chanfrein d'introduction (4) est formé sur l'évidement (A) de la came (1).

3. Procédé selon la revendication 2, **caractérisé en ce que**, pour la formation du chanfrein d'introduction (4), l'évidement (A) de la came (1) est élargi en forme d'entonnoir, au moins sur un côté et au moins sur une partie de sa longueur axiale, l'évidement (A) présentant une bouche, dont le diamètre (d2) correspond au moins au diamètre (D2) de la zone élargie (3) de l'arbre, et présente, dans la zone non élargie en forme d'entonnoir, un diamètre (d1), qui est plus grand que le diamètre (D1) de l'arbre (2) à côté de la zone élargie (3) et plus petit que le diamètre (D2) décrit par les bossages (7) répartis sur la périphérie de l'arbre (2), la came (1) étant d'abord glissée par dessus la zone élargie (3) de l'arbre (2), avec le côté élargi en forme d'entonnoir.

4. Procédé selon la revendication 1, **caractérisé en ce que** les bossages (7) présentent l'amorce du moletage (11) au moins sur un côté, le diamètre le plus petit de l'amorce du moletage (11) étant plus petit, et le diamètre de la partie non élargie en forme d'entonnoir étant plus grand que le diamètre le plus petit (d1) de l'évidement (A) de la came (1), et la came (1) étant glissée par-dessus le diamètre s'élargissant en forme d'entonnoir de l'arbre de support (2).

5. Procédé selon l'une des revendications précédentes, **caractérisé en ce que** les bossages (7) présentent une section transversale constante sur la plus grande partie de leur longueur.

6. Procédé selon l'une des revendications précédentes, **caractérisé en ce que** la came (1) ne s'élargit pas à la suite du processus d'assemblage ou du moins pas plus de 0,05 mm (par rapport au diamètre de sortie du contour extérieur de la came non assemblée).

7. Procédé selon l'une des revendications précédentes, **caractérisé en ce que**, lors de l'engagement par pression, la force de pression augmente de manière presque constante, tout au moins monotone.

8. Arbre à cames pour la commande de soupapes de moteurs à combustion interne, avec un arbre (2) et au moins une came (1), réalisée par un processus de fabrication séparé, laquelle présente un évidement intérieur (A) avec une section transversale ronde et un diamètre (d1) pour la réception de l'arbre (2), ledit arbre (2) étant élargi, au moins par sections, par déformation de la matière du pourtour extérieur de l'arbre (2), au moyen de molettes, au moins dans la région (3) dans laquelle la came (1) est fixée, des bossages (7), repartis sur la périphérie de l'arbre (2) en s'étendant dans le sens longitudinal de l'axe (9) de l'arbre (2), étant formés sur la surface extérieure de l'arbre, **caractérisé en ce que**, sur les bossages (7), est prévu au moins une amorce du moletage (11), qui est conçue de sorte que le diamètre, que décrivent les bossages (7), s'agrandisse en forme d'entonnoir, à partir du bord du moletage, les bossages (7), voisins de l'amorce du moletage (11), qui s'élargit en forme d'entonnoir, présentant une longueur de bossage (10) et un diamètre (D2), la hauteur et la section transversale des bossages (7) étant plus petite dans la région de l'amorce du moletage (11) que dans le reste de la longueur de bossage (10), et les bossages (7) étant, essentiellement par déformation de la matière de la came (1), dans la région de l'évidement (A) de la came (1), partiellement encavés dans celui-ci, et la came (1) étant ainsi reliée, de force et par emboîtement, à l'arbre (2), et la grandeur d'un chevauchement, défini en tant que différence résultant du diamètre (d1) de l'évidement (A) de la came (1) et du diamètre (D2) décrit par les bossages (7), étant située entre 0,05 mm et 0,2 mm.

9. Arbre à cames selon la revendication 8, **caractérisé en ce qu'**un chanfrein d'introduction (4) est formé sur l'évidement (A) de la came (1).

10. Arbre à cames selon la revendication 9, **caractérisé en ce que**, pour la formation du chanfrein d'introduction (4), l'évidement (A) de la came (1) est élargi en forme d'entonnoir, au moins sur un côté, et au moins sur une partie de sa longueur axiale, l'évidement (A) présentant une bouche, dont le diamètre (d2) correspond au moins au diamètre (D2) de la zone élargie (3) de l'arbre, et présente, dans la zone non élargie en forme d'entonnoir, un diamètre (d1), qui est plus grand que le diamètre (D1) de l'arbre (2) à côté de la zone élargie (3) et plus petit que le diamètre (D2) décrit par les bossages (7) répartis sur la périphérie de l'arbre (2).

11. Arbre à cames selon la revendication 8, **caractérisé en ce que** les bossages (7) présentent l'amorce du moletage (11) au moins sur un côté, le diamètre le plus petit de l'amorce du moletage (11) étant plus petit et le diamètre de la partie non élargie en forme d'entonnoir étant plus grand que le diamètre le plus petit (d1) de l'évidement (A) de la came (1).

12. Arbre à cames selon les revendications 8 à 11, **caractérisé en ce que** les bossages (7) sont formés avec une section transversale constante sur la plus grande partie de leur longueur.

13. Arbre à cames selon les revendications 8 à 12, **caractérisé en ce qu'**une came (1) au moins est fabriquée par forgeage ou frittage.

14. Procédé selon les revendications 8 à 13, **caractérisé en ce que** la came (1) n'est pas élargie élastiquement ou au moins pas plus de 0,05 mm (par rapport au diamètre de sortie du contour extérieur de la came non assemblée).
